# EUROPÄISCHE PATENTSCHRIFT

(11) **EP 1 198 311 B1**
(45) Veröffentlichungstag und Bekanntmachung des Hinweises auf die Patenterteilung: **20.10.2004**
(21) Anmeldenummer: 00943625.4
(22) Anmeldetag: 23.05.2000
(51) Int. Cl.: B22C 9/10, B22C 21/14, F16B 19/02

(54) **VORRICHTUNG ZUM VERBINDEN VON KERNTEILEN**
DEVICE FOR CONNECTING CORE PARTS
DISPOSITIF POUR L'ASSEMBLAGE DE NOYAUS

(30) Priorität: 25.05.1999 DE 19923856; 25.05.1999 DE 29920419 U; 19.11.1999 DE 19955957
(43) Veröffentlichungstag der Anmeldung: 24.04.2002
(73) Patentinhaber: Hottinger Maschinenbau GmbH, 68219 Mannheim (DE)
(72) Erfinder: ROMMEL, Reiner, D-68782 Brühl (DE); BEYERER, Jürgen, D-69234 Dielheim (DE); SEIRAFFI, Mohammed, A., D-69723 Schwetzingen (DE)
(74) Vertreter: Naumann, Ulrich, Dr.-Ing.
(86) Internationale Anmeldenummer: PCT/DE2000/001651
(87) Internationale Veröffentlichungsnummer: WO 2000/071282

(56) Entgegenhaltungen:
- EP-A- 0 083 713
- EP-A- 0 904 872
- FR-A- 2 662 218
- US-A- 4 143 701

## Beschreibung

Die Erfindung betrifft Steckverbindung für Kerne oder Kernteile zur Bildung eines Kernpakets, wobei die Kerne mit mindestens einem jeweils zumindest bereichsweise integral ausgebildeten Verbindungsbereich ineinander steckbar sind, wobei die Verbindungsbereiche als ineinander passende Patrize und Matrize ausgebildet sind und wobei zwischen den Verbindungsbereichen der Kerne Klemmmittel wirken.

Die Erfindung bezieht sich auf das Verbinden von Kernen oder Kernteilen mittels Steckverbindung. Die zu verbindenden Kerne kommen zur gegenseitigen flächigen Anlage, liegen meist formschlüssig einander und/oder greifen ineinander ein. Im Gegensatz zu einer flächigen Verklebung werden die Kerne üblicherweise mit dübelähnlichen Verbindungsmitteln miteinander verbunden. Dabei ist wesentlich, dass die Kerne geeignete Ausnehmungen, Öffnungen oder Durchgänge aufweisen, die gegeneinander gerichtet sind und dabei fluchten. Die Verbindungsmittel erstrecken sich durch die Ausnehmungen, Öffnungen oder Durchgänge hindurch und sind dort kraftschlüssig ― in den jeweils miteinander zu verbindenden Kernen ― festgelegt, wodurch die Kerne miteinander verbunden sind. Das Festlegen der Verbindungsmittel erfolgt durch Spreizen innerhalb der Ausnehmungen, Öffnungen oder Durchgänge.

Eine Steckverbindung der hier in Rede stehenden Art dient zum Verbinden von Kernen zu einem Kernpaket für die Gießereitechnik. Dort werden zum Gießen von Formstücken jedweder Art Gießereikerne oder -formen meist aus getrennten Teilen hergestellt, zusammengeführt und miteinander zu einer Gussform bzw. zu einem Kernpaket oder Formpaket verbunden. Diese Kernpakete werden dann zur Herstellung eines beispielsweise metallischen Werkstücks mit geschmolzenem Metall gefüllt, wobei in der Serienfertigung die mit geschmolzenem Metall zu füllenden Kernpakte hintereinander aufgereiht die Fertigungsstraße durchlaufen.

Kern- und Maskenschießmaschinen zur Fertigung der miteinander zu verbindenden Kerne sind seit vielen Jahrzehnten aus der Praxis bekannt. Lediglich beispielhaft wird hier auf die DE 31 48 461 C1 verwiesen, die eine Kern- und Maskenschießmaschine offenbart.

Die Verbindung der Kerne zu einem Kernpaket, beispielsweise zum Gießen eines Motorblocks, erfolgt bislang meist durch Zusammenschrauben der einzelnen Kerne mittels Schrauben oder Zuganker. Dies ist aufgrund der hier erforderlichen manuellen Tätigkeit äußerst aufwendig. Außerdem ist es erforderlich, die Schrauben und Zuganker beim Entkernen der Gußstücke bzw. bei der Aufbereitung des Formstoffs - es handelt sich hier in der Hauptsache um Sand nebst Bindemittel ― wieder auszusondern bzw. zu separieren.

Außerdem ist es für sich gesehen bekannt, Kerne atternativ mit Heiß- oder Kaltkleber miteinander zu verbinden, wobei bei der Verwendung von Heißkleber darauf zu achten ist, daß beim anschließenden Durchlaufen eines Trockenofens zum Trocknen der aufgetragenen Kernschlichte auf Wasserbasis die Ofentemperatur nicht über der Schmelztemperatur des Heißklebers liegt. Wäre dies der Fall, würde sich die Klebverbindung auflösen.

Des Weiteren ist es aus dem Stand der Technik ebenfalls bereits bekannt, Kerne mittels Kernsand miteinander zu verbinden, nämlich dadurch, dass ein sogenannter Schlüsselkern in vorgesehene Hohlräume der zu verbindenden Kerne eingeschossen wird, wodurch eine formschlüssige Verbindung zwischen den jeweiligen Kernen bzw. Kernteile entsteht. Dies erfordert einen separaten Schießvorgang unmittelbar an den bereits gefertigten Kernen bzw. Kernteilen, was einen ganz erheblichen apparativen Aufwand mit sich bringt.

Eine Vorrichtung zum Verbinden von Kernen zur Bildung eines Kernpakets ist u.a. auch aus der DE 197 42 276 A1 bekannt. Aus dieser Entgegenhaltung ist im Konkreten die Verwendung ganz besonderer Verbindungsmittel bekannt, nämlich eines Spreizkörpers, der zunächst mit Spiel in fluchtende Ausnehmungen der zu verbindenden Kerne eingeführt bzw. eingesteckt wird. Dabei handelt es sich um ein sogenanntes Spreizelement zur Herstellung einer kraftschlüssigen Verbindung zwischen den Kernen. Im Konkreten ist eine der Ausnehmungen in einem Vorsprung eines der Kerne ausgebildet. Das Spreizelement hat eine stiftförmige Gestalt und weist in seiner Mantelfläche zwei gegenüberliegende Abflachungen auf. Das Spreizelement ist aus Metall, Kunststoff, Holz oder gar Formsand hergestellt. Zur Verbindung der beiden Kerne wird das Spreizelement in eines der beiden Kerne in die dortige Ausnehmung eingesteckt. Der andere Kern wird auf den herausragenden Teil des Spreizelements aufgesetzt bzw. auf das Spreizelement aufgesteckt. Beim Zusammendrücken der Kerne mit den jeweiligen Stirnseiten mittels einer pneumatischen oder hydraulischen Einrichtung bzw. mit einem entsprechenden Handhabungsgerät spreizt das Spreizelement dort, wo es keine Abflachung aufweist, einen ringförmigen Vorsprung desjenigen Kerns, in welchen es eingesteckt wird, wodurch sich dieser Kern bzw. dieser Vorsprung gegenüber der umgebenden Wandung des anderen Kerns aufweitet, so dass Kraftschluss zwischen den beiden ineinander gesteckten Kernen entsteht.

Letztendlich wirkt die bekannte Steckverbindung im Sinne eines Keils, wirkt vor allem ausschließlich zweiseitig auf die zu spreizenden Bereiche, so dass aufgrund der dort entstehenden Spannungen nicht selten Materialbruch an den zu verbindenden Kernen auftritt. Dies geschieht insbesondere in solchen Fällen, wo es sich bei den Kernen um spröde, brüchige Teile handelt, wie dies bei Kernen aus Formsand meist der Fall ist.

Aus der EP 0 083 713 A2 ist eine gattungsbildende Steckverbindung bekannt. Im Rahmen dieser bekannten Steckverbindung sind zwei Kerne zur Bildung eines Kernpakets ineinander steckbar. Die Kerne weisen einen jeweils zumindest bereichsweise integral ausgebildeten Verbindungsbereich auf. Die Verbindungsbereiche sind als ineinander passende Patrize und Matrize ausgebildet. Zwischen den Verbindungsbereichen der Kerne sind Klemmmittel vorgesehen, die zwischen den Verbindungsbereichen wirken. Die Klemmmittel sind in den Kernen fest verankert und verbinden die zusammengeführten Kerne unverrückbar miteinander. Dabei wirken die Klemmmittel stets paarweise und bilden eine Klemmverbindung. Die Kerne sind aus Kernsandmaterial gefertigt und werden durch Zusammenstecken zu einem Kernpaket komplettiert.

Die gattungsbildende Steckverbindung ist jedoch in der Praxis problematisch, da nämlich die Klemmmittel beim Schießen der Kerne in diese eingebaut werden müssen, und zwar mittels einer ganz besonderen Vorrichtung, die dort als Mittelplatte bezeichnet ist. Jedenfalls ist es im Stand der Technik erforderlich, die die Klemmwirkung hervorrufenden Klemmmittel vor dem eigentlichen Kernschießen exakt zu positionieren, so dass diese ― beim geschossenen Kern ― an einer definierten Stelle positioniert sind. Werden beim Kernschießen die Klemmmittel ― wodurch auch immer - von ihrer genauen Position entfernt, wird zwangsweise ein Ausschussteil produziert. Werden die Klemmmittel gar vergessen, lässt sich der geschossene Kern ebenfalls nicht mehr verwenden. Folglich bedingt die gattungsbildende Steckverbindung einen erheblichen Aufwand zur Realisierung einer sicheren Verbindung zwischen Kernteilen, der im Hinblick auf eine Massenfertigung, insbesondere im Hinblick auf ein stetes Bestreben auf Kostenreduktion, nicht zu verantworten ist.

Ein weiterer Nachteil bei der gattungsbildenden Steckverbindung ergibt sich durch das paarweise Zusammenwirken der Klemmmittel, wonach nämlich ein Klemmmittel der Patrize und ein weiteres Klemmmittel der Matrize fest zugeordnet ist, wobei die Klemmmittel ― jeweils an Patrize und Matrize ― fest verankert sind. Aufgrund dieser starren Befestigung der Klemmmittel ist ein Ausgleich eventuell auftretender Spannungsspitzen im Bereich der Klemmmittel bei relativer Bewegung der Kerne zueinander ausgeschlossen. Schon geringste Bewegungen der zusammengeführten Kerne gegeneinander können zu einem Brechen der oft brüchigen und spröden Kerne aus Kernsand im Bereich der Klemmmittel führen. Außerdem können mechanische Spannungen über die Klemmmittel in das Innere der Kerne eingebracht werden und die Kerne von innen heraus sprengen. Nachteilig ist auch, dass die Klemmmittel die Kerne unverrückbar miteinander verbinden und paarweise wirken. Durch die paarweise und unverrückbare Verbindung können Spannungen über die Klemmmittel von einem Kern in den anderen übertragen werden. Die Unverrückbarkeit verhindert zusätzlich einen Ausgleich eventueller Spannungen durch Verdrehungen und Verkantungen der Kerne.

Aus der FR 2 662 218 A1 ist ebenfalls eine Steckverbindung bekannt, wobei dort ein in beide Kerne hineinragender, wie ein Dübel wirkender Stift vorgesehen ist, der in die beiden zu verbindenden Kerne gleichermaßen unter Klemmwirkung hineinragt.

Dies erfordert eine exakte Anpassung der in beiden Kernen vorgesehenen Ausnehmung an den Stift, insbesondere im Bereich einer mittigen Schulter. Außerdem sind dort weitere elastische Klemmmittel vorgesehen, die beidseitig über die Kontur des Stifts aufgezogen sind und eine Klemmwirkung zwischen dem Stift und der Innenwandung der Kerne hervorrufen.

Der vorliegenden Erfindung liegt daher die Aufgabe zugrunde, eine Steckverbindung der gattungsbildenden Art derart zu gestalten und weiterzubilden, dass bei einfachster Fertigung ein sicheres Verbinden von Kernen möglich ist.

Die erfindungsgemäße Steckverbindung löst die voranstehende Aufgabe durch die Merkmale des Patentanspruches 1. Danach ist eine gattungsbildende Steckverbindung derart ausgestaltet, dass die Klemmmittel als auf den als Patrize dienenden Verbindungsbereich zumindest bereichsweise aufleg- bzw. aufsteckbare oder in den als Matrize dienenden Verbindungsbereich zumindest bereichsweise einleg- bzw. einsteckbare, formbare flächige Lage ausgeführt sind, so dass die Klemmmittel beim Ineinanderstecken eine Klemmwirkung entfalten.

Erfindungsgemäß ist zunächst einmal erkannt worden, dass die im gattungsbildenden Stand der Technik realisierte Verbindung zwischen den Kemteilen problematisch ist. In einem weiteren Schritt wurde ― ebenfalls erfindungsgemäß ― tiefgreifend die Ursache des Problems analysiert, wobei in erfindungsgemäßer Weise erkannt worden ist, dass die Vorkehrung von Klemmmitteln gemäß Stand der Technik nicht nur problematisch in der Fertigung bzw. Handhabung ist, sondern insbesondere auch in Bezug auf auftretende Spannungen bzw. Spannungsspitzen beim Zusammenstecken der Kernteile. Letztendlich ist die im Stand der Technik beschriebene "Verbindungstechnik" sowohl unter fertigungstechnischen Gesichtspunkten als auch unter handhabungstechnischen Gesichtspunkten unbrauchbar.

In völliger Abkehr vom gattungsbildenden Stand der Technik wird von der Verwendung weiterer Hilfsmittel, so beispielsweise einer zur Positionierung dienenden Mittelplatte, aber auch von der Verwendung weiterer Hilfsmittel zum Verbinden der Kernteile, abgesehen. Ganz im Gegenteil und sicherlich auch unter Überwindung von Vorurteilen der Fachwelt sind nämlich in erfindungsgemäßer Weise ledialich integrale Bereiche, nämlich im Sinne einer Patrize und Matrize, vorgesehen, die ausschließlich zur Definition der Verbindungsbereiche dienen. Ohne weitere Klemmmittel bereits bei der Produktion, d. h. beim Kernschießen, vorsehen zu müssen, werden nunmehr einfachste Klemmmittel vorgesehen, die auf den als Patrize dienenden Verbindungsbereich zumindest bereichsweise aufleg- bzw. aufsteckbar oder in den als Matrize dienenden Verbindungsbereich zumindest bereichsweise einleg- bzw. einsteckbar sind. Diese Klemmmittel sind als formbare flächige Lage ausgeführt und entfalten ihre Klemmwirkung beim Einstecken der Patrize in die Matrize, indem nämlich durch die Klemmmittel der Bereich bzw. Spalt zwischen Patrize und Matrize zumindest bereichsweise ausgefüllt wird. Damit wird ein umfängliches Festklemmen von Patrize in der jeweiligen Matrize erreicht, ohne lokale Spannungsspitzen zu erzeugen. Die Handhabung ist einfachst, da ein besonderes Positionieren der Klemmmittel nicht erforderlich ist. Eine Anpassung der Klemmmittel an die Form von Patrize und/oder Matrize ist nicht erforderlich.

Im Rahmen einer besonders geeigneten Ausgestaltung der Verbindungsbereiche ist der Verbindungsbereich des einen Kerns als Kegel oder Kegelstumpf und der Verbindungsbereich des anderen Kerns als kegelartige oder kegelstumpfartige Ausnehmung ausgebildet. Beliebige andere Formen sind denkbar, wobei stets sicherzustellen ist, dass die Verbindungsbereiche der Kerne zumindest weitgehend formschlüssig ineinander passen.

Sofern die Verbindungsbereiche als Kegel bzw. Kegelstumpf und als entsprechende Ausnehmungen ausgebildet sind, können diese unterschiedliche Neigungswinkel der jeweiligen Mantelfläche aufweisen. Dabei hat sich gezeigt, dass sich bei einem nur äußerst geringen Neigungswinkel der Mantelfläche eine besonders gute und insoweit hinreichende Verbindung aufgrund von Kraftschluss ergibt. Eine Anpassung an die jeweiligen Gegebenheiten der zu verbindenden Kerne ist möglich.

Die Klemmmittel lassen sich im Konkreten derart ausgestalten, dass sie als auf den als Patrize dienenden Verbindungsbereich zumindest bereichsweise aufleg- bzw. aufsteckbare und/oder in den als Matrize dienenden Verbindungsbereich zumindest bereichsweise einleg- bzw. einsteckbare, formbare flächige Lage ausgeführt sind. Im Konkreten könnte die Lage als geschlossene oder offene Hülse ausgeführt sein, wobei diese Hülse vorzugsweise der Form des Verbindungsbereichs angepasst ist. Ebenso könnte die Lage bzw. könnten die Klemmmittel als geschlossener oder offener Ring ausgeführt sein, der zumindest bereichsweise über den als Patrize dienenden Verbindungsbereich gesteckt bzw. geschoben wird. Sowohl im Rahmen einer Ausgestaltung als Hülse als auch im Rahmen einer Ausgestaltung als Ring könnten die Klemmmittel offen sein, so dass eine Anpassung an unterschiedliche Durchmesser der Verbindungsbereiche ohne weiteres möglich ist. Wesentlich ist jedenfalls, dass unter Mitwirkung der Klemmmittel ein Kraftschluss zwischen den Verbindungsbereichen der zu verbindenden Kerne entsteht, wobei die Kerne schonend miteinander verbunden sind.

Im Rahmen einer ganz besonders vorteilhaften Ausgestaltung ist es von Vorteil, wenn die die Klemmmittel bildende Lage auf das freie Ende des als Patrize dienenden Verbindungsbereichs oder auf die Öffnung des als Matrize dienenden Verbindungsbereichs auflegbar und beim Ineinanderstecken der Verbindungsbereiche bis zum Erzeugen einer hinreichenden Klemmwirkung zwischen die Verbindungsbereiche einzieh- bzw. einschiebbar ist. Insoweit wären ganz besonders einfache Klemmmittel geschaffen, die beim Ineinanderstecken der Verbindungsbereiche in den Raum zwischen den Verbindungsbereichen eingezogen wird, wobei eine dabei entstehende Faltenbildung nicht unbedingt stört. Ganz im Gegenteil trägt eine solche Faltenbildung zur Klemmwirkung bei, so dass beim Zusammenstecken der Verbindungsbereiche allseitig Kraftschluss erreicht wird.

Im Rahmen einer solchen einfachen Ausgestaltung ist es von weiterem Vorteil, wenn die Lage zumindest weitgehend kreisrund und im Randbereich gezackt, gefranst oder sternförmig ausgebildet ist. Insoweit kann bei hinreichend starkem Einschnitt eine gegenseitige Überlappung vermieden werden, so dass die Kerne zerstörende Spannungsspitzen gar nicht erst auftreten. Die Zackung, Fransung oder sternförmige Ausbildung kann dadurch erreicht werden, dass bei der kreisrunden Lage nicht nur Einschnitte gefertigt, sondern Ausstanzungen vorgenommen werden, so dass sich die übrig bleibende Fläche der Lage allseitig zwischen den Verbindungsbereichen an deren Mantelfläche anpasst, ohne dass diese sich anpassenden Bereiche der Lage einander überlagern. Beliebige weitere Ausgestaltungen bzw. Formen der Klemmmittel sind denkbar.

Damit eine sichere Positionierung des als flächige Lage ausgebildeten Klemmmittels möglich ist, insbesondere im Rahmen einer Über-Kopf-Montage oder zur Sicherung gegen Luftzug, könnte das Klemmmittel bzw. die das Klemmmittel bildende Lage mit Klebstoff versehen sein. Mittels des Klebstoffs würde dann das Klemmmittel an dem die Patrize bildenden Verbindungsbereich angeklebt werden. Auch nachträglich ließe sich dort Klebstoff bzw. ein Klebemittel anbringen. Ebenso ist es denkbar, dass das Klemmmittel bzw. die Lage zumindest geringfügig oder teilweise in den als Matrize dienenden Verbindungsbereich eingeführt bzw. eingeschoben wird, so dass das Klemmmittel aufgrund der dabei auftretenden Reibungskräfte dort bereits sicher gehalten wird, bis schließlich der die Patrize bildende Verbindungsbereich in die Matrize eingeführt wird, wobei das Klemmmittel die eigentlich Klemmwirkung zwischen den beiden Verbindungsbereichen erzeugt.

Wie bereits zuvor erwähnt, ist es von ganz besonderem Vorteil, wenn die Klemmmittel aus einem weichen, an die Form der Verbindungsbereiche zumindest weitgehend anpassbaren Material gefertigt sind, so dass sich die Klemmmittel jedweden Formen der Verbindungsbereiche anpassen. Dabei sollten die Klemmmittel hinreichend dick ausgeführt sein, um nämlich zumindest teilweise kleinste Partikel, so bspw. Kernsandpartikel bei der Verbindung von Kernpaketen, in sich aufnehmen zu können. Durch diese Maßnahme wird zum einen eine hinreichende Verbindung zwischen den zu verbindenden Kernen geschaffen und zum anderen wird der bei Kernen meist auftretende "Rollsplit-Effekt" vermieden, wonach nämlich beim Verbinden der Kerne beim gegenseitigen Aneinandergleiten der Kerne Sand abgerieben wird und in Form von Sandsicken ein hinreichendes Ineinanderstecken der Kerne erschwert oder gar ausschließt. Folglich lässt sich durch die erfindungsgemäße Verwendung der Klemmmittel ein weiteres bislang auftretendes Problem wirksam eliminieren.

Die Klemmmittel lassen sich in ganz besonders vorteilhafter Weise zur Kompensation des zunehmenden Verschleißes an Werkzeugen einsetzen, um nämlich die erforderlichen Passgenauigkeiten von Patrize und Matrize aufrechtzuerhalten bzw. wiederherzustellen. Insoweit lassen sich nämlich die Klemmmittel mit auftretendem Verschleiß an den Werkzeugen dicker ausgestalten, so dass der dickere Klemmstoff zumindest in einem gewissen Maße die erforderliche Passgenauigkeit wiederherstellen kann. Jedenfalls könnte man mit zunehmendem Verschleiß der Werkzeuge zunehmend dickere Klemmmittel zur Kompensation der sich aus dem Verschleiß ergebenden Probleme verwenden.

An dieser Stelle sei angemerkt, dass man dem Verschleiß kritischer Werkzeugbereiche durch Hartmetalleinsätze entgegenwirken kann, so dass dem Klemmmittel abermals eine ganz besondere Funktion zukommt, nämlich abermals zur Vermeidung oder zumindest zur Verringerung des Verschleißes an den Werkzeugen.

Im Konkreten könnten die Klemmmittel aus Zellulose oder dgl. gefertigt sein, wobei im Rahmen einer ganz besonders einfachen Ausgestaltung Papier oder Karton verwendet wird. Die Kosten eines solchen Klemmmittels lassen sich entsprechend minimieren.

Grundsätzlich ist es jedoch auch denkbar, dass die Klemmmittel aus Kunststoff oder sogar aus einem weichen Metall gefertigt sind, und zwar je nach der jeweils zugrundeliegenden Aufgabenstellung. Wesentlich ist jedenfalls, dass eine formmäßige Anpassung an die Verbindungsbereiche möglich ist, wobei bei hinreichend weichem Material ein Eindringen kleinster Partikel möglich sein sollte.

Zur Begünstigung der zwischen den Verbindungsbereichen erforderlichen Klemmwirkung ist es ebenfalls von Vorteil, wenn die Klemmmittel auf mindestens einer der beiden Oberflächen strukturiert sind. So könnten die Klemmmittel geprägt oder mit Schuppen oder dgl. versehen sein.

Des Weiteren ist es möglich, dass die Klemmmittel auf mindestens einer Seite beschichtet sind. Sofern das Material der Klemmmittel nicht hinreichend weich genug sein sollte, könnte dort eine weiche Beschichtung vorgesehen sein. Ebenso könnte als Beschichtung ein Klebstoff dienen, so dass sich Partikel bereits durch den Klebstoff selbst binden lassen. Die aus Klebstoff dienende Beschichtung könnte zu der eigentlichen Klemmwirkung obendrein eine adhäsive Verbindung bewerkstelligen.

Im Rahmen einer ganz besonders raffinierten Ausgestaltung könnte es sich bei dem Material der Klemmmittel um ein solches Material handeln, welches definiert expandiert. So könnte man bspw. ein bei bestimmten Temperaturen oder bestimmten Luftfeuchtigkeiten expandierendes Material verwenden, so dass erst im zusammengeschobenen Zustand der Verbindungsbereiche oder zusätzlich zu der beim Zusammenschieben entstehenden Klemmwirkung eine abermalige Verspannung der Teile durch nachträgliche Expansion der Klemmmittel stattfindet.

Es gibt nun verschiedene Möglichkeiten, die Lehre der vorliegenden Erfindung in vorteilhafter Weise auszugestalten und weiterzubilden. Dazu ist einerseits auf den Patentanspruch 1 sowie auf die Unteransprüche und andererseits auf die nachfolgende Erläuterung zweier Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigt
- Fig. 1: in einer schematischen Seitenansicht ein Ausführungsbeispiel einer erfindungsgemäßen Steckverbindung, wobei dort zwischen den Verbindungsbereichen zweier Kerne eine als Klemmmittel dienende Papierhülse eingebracht ist und
- Fig. 2: in einer schematischen Draufsicht ein Ausführungsbeispiel eines als sternförmiges Papierblatt ausgeführten Klemmmittels, welches beim Ineinanderstecken der Verbindungsbereiche zwischen die Verbindungsbereiche ― zwangsweise ― eingezogen wird.

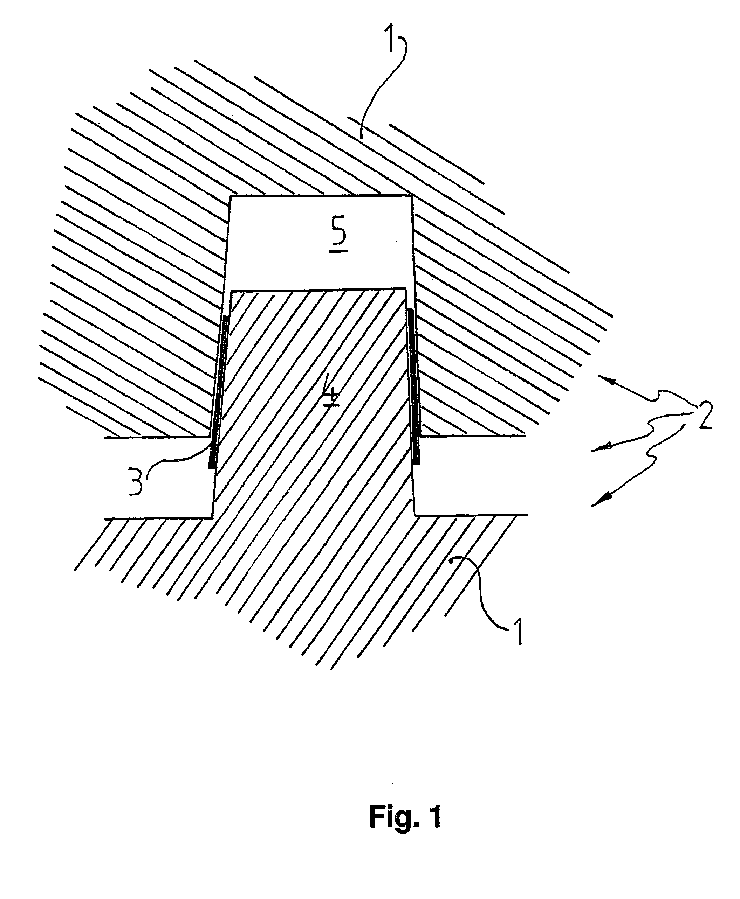

Bei dem in Fig. 1 gezeigten Ausführungsbeispiel dient die erfindungsgemäße Steckverbindung zum Verbinden zweier Kerne 1, nämlich zur Bildung eines Kernpakets. Die Kerne 1 werden jeweils über einen bereichsweise ausgebildeten Verbindungsbereich 2 ineinandergesteckt, so dass die Kerne 1 aufgrund der ineinandergesteckten Verbindungsbereiche 2 wirksam miteinander verbunden sind.

In erfindungsgemäßer Weise erfolgt die eigentliche Verbindung auf kraftschlüssige Weise, nämlich dadurch, dass zwischen den Verbindungsbereichen 2 der Kerne 1 Klemmmittel 3 vorgesehen sind, die beim Ineinanderstecken der Verbindungsbereiche 2 eine Klemmwirkung entfalten.

Fig. 1 lässt des Weiteren erkennen, dass die Verbindungsbereiche 2 als ineinander passende Patrize 4 und Matrize 5 ausgebildet sind.

Der Verbindungsbereich 2 (Patrize 4) des einen Kerns 1 ist als Kegelstumpf und der Verbindungsbereich 2 (Matrize 5) des anderen Kerns 1 ist als kegelstumpfartige Ausnehmung ausgebildet, wobei die beiden Verbindungsbereiche 2 in formschlüssiger Hinsicht aufeinander abgestimmt sind. Ohne Verwendung der Klemmmittel 3 wäre eine Verbindung der beiden Bereiche nicht möglich, jedenfalls nicht im Rahmen der erfindungsgemäßen Ausgestaltung.

Die Fig. 1 lässt des weiteren erkennen, dass der als Kegelstumpf ausgebildete Verbindungsbereich 2 und entsprechend die komplementäre Ausnehmung des anderen Verbindungsbereichs 2 einen nur äußerst geringen Neigungswinkel der Mantelfläche aufweisen. Zwischen den beiden Verbindungsbereichen 2 sind die Klemmmittel 3 angeordnet, die auf den Kegelstumpf vor Zusammenfügen der beiden Kerne 1 aufgeschoben sind.

Im Konkreten sind die Klemmmittel 3 als kegelstumpfartige Hülse ausgeführt, die den als Kegelstumpf ausgebildeten Verbindungsbereich 2 des einen Kerns 1 zumindest teilweise umgibt. Andere Ausgestaltungen sind denkbar.

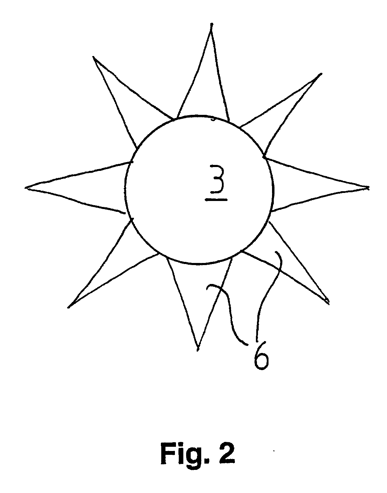

Fig. 2 zeigt eine alternative Ausgestaltung der Klemmmittel 3, nämlich dahingehend, dass die Klemmmittel 3 als papierblattförmige Lage auf das freie Ende des als Patrize 4 dienenden Verbindungsbereichs 2 oder auf die Öffnung des als Matrize 5 dienenden Verbindungsbereichs 2 auflegbar und beim Ineinanderstecken der Verbindungsbereiche 2 bis zum Erzeugen einer hinreichenden Klemmwirkung zwischen die Verbindungsbereiche 2 einziehbar bzw. einschiebbar sind. Insoweit bietet sich eine ganz besondere Ausführung der Klemmmittel 3 an, nämlich eine kreisrunde und im Randbereich sternförmig ausgebildete Ausführung, so dass die den Randbereich bildenden Zacken 6 beim Ineinanderschieben der Verbindungsbereiche 2 zur Anlage an der Mantelfläche des Kegelstumpfs kommen, ohne sich dabei zu überlappen. Durch Überlappung auftretende Spannungsspitzen, die letztendlich zu einem Bruch der zu verbindenden Teile führen können, sind dadurch wirksam vermieden.

Bei dem hier gewählten Ausfühungsbeispiel sind die Klemmmittel 3 aus hinreichend weichem Papier gefertigt, wobei das Papier hinreichend dick ausgeführt ist, so dass sich aus den Kernen 1 lösende Partikel des Kernsandes in das Papier hineindrücken können. Ein "Rollsplit-Effekt" beim Ineinanderschieben der Verbindungsbereiche 2 ist dadurch wirksam vermieden.

Hinsichtlich weiterer ― alternativer ― Ausgestaltungen der beanspruchten Lehre sei - nicht zuletzt zur Vermeidung von Wiederholungen ― auf die Ausführungen im allgemeinen Teil der Beschreibung verwiesen.

## Patentansprüche

1. Steckverbindung zwischen Kernen (1) oder Kernteilen zur Bildung eines Kernpakets, wobei die Kerne (1) mit mindestens einem jeweils zumindest bereichsweise integral ausgebildeten Verbindungsbereich (2) ineinander steckbar sind, wobei die Verbindungsbereiche (2) als ineinander passende Patrize (4) und Matrize (5) ausgebildet sind und wobei zwischen den Verbindungsbereichen (2) der Kerne (1) Klemmmittel (3) wirken,
**dadurch gekennzeichnet, dass** die Klemmmittel (3) als auf den als Patrize (4) dienenden Verbindungsbereich (2) zumindest bereichsweise aufleg- bzw. aufsteckbare oder in den als Matrize (5) dienenden Verbindungsbereich (2) zumindest bereichsweise einleg- bzw. einsteckbare, formbare flächige Lage ausgeführt sind, so dass die Klemmmittel (3) beim Ineinanderstecken eine Klemmwirkung entfalten.

2. Steckverbindung nach Anspruch 1, **dadurch gekennzeichnet, dass** der Verbindungsbereich (2) des einen Kerns als Kegel oder Kegelstumpf und der Verbindungsbereich (2) des anderen Kerns als kegelartige oder kegelstumpfartige Ausnehmung ausgebildet ist, wobei der als Kegel oder Kegelstumpf ausgebildete Verbindungsbereich (2) einen nur äußerst geringen Neigungswinkel der Mantelfläche aufweisen kann

3. Steckverbindung nach Anspruch 1 oder 2, **dadurch gekennzeichnet, dass** die Lage als geschlossene oder offene Hülse oder als geschlossener oder offener Ring ausgeführt ist.

4. Steckverbindung nach einem der Ansprüche 1 bis 3, **dadurch gekennzeichnet, dass** die Lage auf das freie Ende des als Patrize (4) dienenden Verbindungsbereichs (2) oder auf die Öffnung des als Matrize (5) dienenden Verbindungsbereichs (2) auflegbar und beim Ineinanderstecken der Verbindungsbereiche (2) bis zum Erzeugen einer hinreichenden Klemmwirkung zwischen die Verbindungsbereiche (2) einzieh- bzw. einschiebbar ist, wobei die Lage zumindest weitgehend kreisrund und im Randbereich gezackt, gefranst oder sternförmig ausgebildet sein kann.

5. Steckverbindung nach einem der Ansprüche 1 bis 4, **dadurch gekennzeichnet, dass** die Klemmmittel (3) aus einem weichen, an die Form der Verbindungsbereiche (2) zumindest weitgehend anpassbaren Material gefertigt sind.

6. Steckverbindung nach einem der Ansprüche 1 bis 5, **dadurch gekennzeichnet, dass** die Klemmmittel (3) zur zumindest teilweisen Aufnahme kleinster Partikel, bspw. Kernsandpartikel, hinreichend dick ausgeführt sind.

7. Steckverbindung nach einem der Ansprüche 1 bis 6, **dadurch gekennzeichnet, dass** die Klemmmittel (3) aus Zellulose oder dgl., oder aus Papier oder Karton, oder aus Kunststoff, oder aus einem weichen Metall gefertigt sind.

8. Steckverbindung nach einem der Ansprüche 1 bis 7, **dadurch gekennzeichnet, dass** die Klemmmittel (3) auf mindestens einer der beiden Oberflächen strukturiert sind.

9. Steckverbindung nach einem der Ansprüche 1 bis 8, **dadurch gekennzeichnet, dass** die Klemmmittel (3) auf mindestens einer Seite beschichtet sind, wobei die Beschichtung aus einem weichen Material, insbesondere aus Klebstoff, bestehen kann.

10. Steckverbindung nach einem der Ansprüche 1 bis 9, **dadurch gekennzeichnet, dass** das Material der Klemmmittel (3) definiert expandierbar ist.

## Claims

1. A plug-in joint between cores (1) or core parts to form a core assembly, in which the cores (1) can be plugged into each other by at least one connecting area (2) made integral in each case at least in places, the connecting areas (2) being in the form of a male portion (4) and female portion (5) fitting into each other and in which there are gripping means (3) acting between the connecting areas (2) of the cores (1),
**characterised in that** the gripping means (3) are in the form of a deformable flat layer which at least in places can be laid upon or fitted onto the connecting area (2) constituting the male portion (4) or at least in places can be laid in or inserted into the connecting area (2) constituting the female portion (5), so that when these are inserted into each other the gripping means (3) develop a gripping action.

2. A plug-in joint according to claim 1, **characterised in that** the connecting area (2) of one core is in the form of a cone or truncated cone and the connecting area (2) of the other core is in the form of a conical or truncated cone-shaped recess, and the connecting area (2) in the form of a cone or truncated cone may have no more than an extremely small angle of inclination of its circumferential surface.

3. A plug-in joint according to claim 1 or 2, **characterised in that** the layer is in the form of a closed or open sleeve or of a closed or open ring.

4. A plug-in joint according to any one of claims 1 to 3, **characterised in that** the layer can be laid upon the free end of the connecting area (2) constituting the male portion (4) or upon the opening of the connecting area (2) constituting the female portion (5) and when the connecting areas (2) are inserted into each other can be pulled or pushed in until an adequate gripping action is produced between the connecting areas (2), and the layer may be at least substantially circular and in the edge area serrated, fringed or star-shaped.

5. A plug-in joint according to any one of claims 1 to 4, **characterised in that** the gripping means (3) are produced from a soft material capable at least substantially of adapting to the shape of the connecting areas (2).

6. A plug-in joint according to any one of claims 1 to 5, **characterised in that** the gripping means (3) are made sufficiently thick to absorb very small particles, for example core sand particles, at least to some degree.

7. A plug-in joint according to any one of claims 1 to 6, **characterised in that** the gripping means (3) are produced from cellulose or similar, or from paper or card, or from plastic, or from a soft metal.

8. A plug-in joint according to any one of claims 1 to 7, **characterised in that** the gripping means (3) are textured on at least one of the two surfaces.

9. A plug-in joint according to any one of claims 1 to 8, **characterised in that** the gripping means (3) are coated on at least one side, and the coating may consist of a soft material, especially adhesive.

10. A plug-in joint according to any one of claims 1 to 9, **characterised in that** the material of the gripping means (3) can be expanded in a defined manner.

## Revendications

1. Liaison par enfoncement entre des noyaux (1) ou des parties de noyaux pour la formation d'un paquet de noyaux, les noyaux (1) pouvant être enfoncés les uns dans les autres par au moins une zone de liaison (2) conformée respectivement d'une seule pièce au moins par zones, les zones de liaison (2) étant conformées en tant que poinçons (4) et cavités (5) assortis les uns dans les autres et des moyens de serrage (3) agissant entre les zones de liaison (2) des noyaux (1),
**caractérisée par le fait que** les moyens de serrage (3) sont réalisés sous forme de couche mince déformable pouvant être déposée ou respectivement emboîtée au moins par zones sur la zone de liaison (2) servant de poinçon (4) ou pouvant être insérée ou respectivement enfoncée au moins par zones dans la zone de liaison (2) servant de cavité (5), de telle sorte que les moyens de serrage développent une action de serrage lors de l'enfoncement les uns dans les autres.

2. Liaison par enfoncement selon la revendication 1,
**caractérisée par le fait que** la zone de liaison (2) de l'un des noyaux est conformée en tant que cône ou tronc de cône et la zone de liaison (2) de l'autre noyau en tant qu'évidement en forme de cône ou de tronc de cône, la zone de liaison (2) conformée en tant que cône ou tronc de cône pouvant présenter un angle d'inclinaison seulement extrêmement faible de la surface d'enveloppe.

3. Liaison par enfoncement selon la revendication 1 ou 2,
**caractérisée par le fait que** la couche est réalisée sous forme de manchon fermé ou ouvert ou sous forme de bague fermée ou ouverte.

4. Liaison par enfoncement selon l'une des revendications 1 à 3,
**caractérisée par le fait que** la couche peut être déposée sur l'extrémité libre de la zone de liaison (2) servant de poinçon (4) ou sur l'ouverture de la zone de liaison (2) servant de cavité (5) et peut être repliée ou respectivement rétractée lors de l'enfoncement des zones de liaison (2) les unes dans les autres jusqu'à production d'un serrage suffisant entre les zones de liaison (2), la couche pouvant être conformée au moins largement circulaire et dentelée, enfrangée ou en forme d'étoile dans la zone de bord.

5. Liaison par enfoncement selon l'une des revendications 1 à 4,
**caractérisée par le fait que** les moyens de serrage (3) sont fabriqués à partir d'un matériau mou au moins largement adaptable à la forme des zones de liaison (2).

6. Liaison par enfoncement selon l'une des revendications 1 à 5,
**caractérisée par le fait que** les moyens de serrage (3) sont réalisés suffisamment épais pour la réception au moins partielle de plus petites particules, par exemple des particules de sable de noyaux.

7. Liaison par enfoncement selon l'une des revendications 1 à 6,
**caractérisée par le fait que** les moyens de serrage (3) sont fabriqués à partir de cellulose ou similaire, ou à partir de papier ou de carton, ou à partir de matière synthétique ou à partir d'un métal mou.

8. Liaison par enfoncement selon l'une des revendications 1 à 7,
**caractérisée par le fait que** les moyens de serrage (3) sont structurés sur au moins l'une des deux surfaces.

9. Liaison par enfoncement selon l'une des revendications 1 à 8,
**caractérisée par le fait que** les moyens de serrage (3) sont enduits sur au moins un côté, l'enduction pouvant être constituée d'un matériau mou, en particulier d'une colle.

10. Liaison par enfoncement selon l'une des revendications 1 à 9,
**caractérisée par le fait que** le matériau des moyens de serrage (3) est expansible de manière définie.
